# EUROPEAN PATENT SPECIFICATION

(11) **EP 0 653 717 B1**
(45) Date of publication and mention of the grant of the patent: **19.03.2003**
(21) Application number: 94117531.7
(22) Date of filing: 07.11.1994
(51) Int. Cl.: G07F 19/00

(54) **Automatic cash transaction system**
Automatisches Bargeschäftssystem
Système automatique de transactions du comptant

(30) Priority: 15.11.1993 JP 28510593
(43) Date of publication of application: 17.05.1995
(73) Proprietor: Hitachi, Ltd., Chiyoda-ku, Tokyo 101 (JP)
(72) Inventor: Sato, Ryoko, Niihari-gun, Ibaraki-ken (JP); Takeuchi, Ikuo, Niihari-gun, Ibaraki-ken (JP)
(74) Representative: Beetz & Partner Patentanwälte

(56) References cited:
- EP-A- 0 348 959
- GB-A- 2 145 265
- US-A- 5 010 238
- US-A- 5 144 115

## Description

### Field of the Invention

The present invention relates to an automatic cash transaction system, and in particular to an automatic cash transaction system capable of executing transactions on the basis of past transaction data of users.

### Description of the Related Art

In recent years, a large number of automatic cash transaction machines (ATM) capable of performing transactions such as cash dispensing, deposit, and transfer on the basis of manual operation by customers have been installed in ATM corners in order to increase banking convenience.

Each automatic cash transaction machine typically reads out the transaction account of a customer recorded in a portable external storage medium, such as a card or a deposit passbook and transmits transaction data inputted by the user via an interactive user interface, to a host computer.

When necessary transaction data are to be inputted to an automatic cash transaction machine, inputting data one by one costs the user hard labor. In order to facilitate transaction data inputting, an automatic transfer system using IC cards as described in JP-A-61-46585 was provided. In this system, data inputted by a customer is stored in a storage medium to use the data in another time. Such data includes an account number, the amount of moved funds, a branch office identification number of the counterparty. When the customer sends funds to the counterparty in another time, he inserts the storage medium and selects an item displayed in accordance with the data stored in the medium. Then, data necessary for the new transaction is automatically loaded from the media into the ATM, thereafter the transaction is started.

However, the above described conventional technique relates to a system used exclusively for transfer transactions. That is, a customer who operates ATM for transactions other than transfer has to input necessary data every time. An automatic cash transaction system facilitating a variety of transactions is desired. In such a system a variety of transaction data are stored in an external storage medium.

In that case, there are the following two ways to display data on the operation panel of the ATM on the basis of transaction data stored in the medium so as to allow the customer to search desired data easily and quickly.

One of them is a method of displaying all transaction data stored in the external storage medium. According to this method, all that the user should do is to select data usable for the current transaction from the past transaction data. If displays are made in order of priority, such as in order of transaction frequency or in order of transaction execution date, transactions performed frequently can be found rapidly.

On the other hand, information which can be displayed on one screen is limited. When a transaction having a low priority order is performed, manual operations for switching over display screens several times must be conducted. In that case, such a method that first the user inputs a part of past transaction data and then, only transaction data relating to the inputted data are displayed to be selected by the user is suitable. By using this method, the user can find desired transaction data comparatively rapidly even if they are transaction data having a low display priority order.

For allowing the user to use properly and smoothly the above described two display methods thus having respective advantages according to occasional transactions, the display methods must be switched over according to the user's way of operation.

Furthermore, the above described conventional technique implements a system for simplifying transaction data inputting in case a transaction performed before should be performed again. Therefore, a method for simplifying transaction data inputting in performing a new transaction having contents partly different from those of a past transaction is not mentioned. That is to say, in case a transaction having contents slightly different from those of a transaction executed before stored in the medium is to be performed, transaction data must be inputted one by one.

For reducing the labor of the user as much as possible, transaction data inputting must be simplified even in such a transaction.

Furthermore, in the above described conventional technique, the user cannot make efficient use of stored transaction data for some other purposes. Aiming at only simplification of transaction data inputting in spite of use of a storage medium such as an IC card having a large storage capacity brings about only a minor advantage.

GB 2 145 265 shows an automatic cash transaction system comprising an external storage means for storing the data of a single transaction of a user and a terminal device having means for reading and displaying transaction data stored in the external storage means. However, this system is only of limited use, since only data of a single transaction is stored in the external storage means.

### SUMMARY OF THE INVENTION

An object of the present invention is to provide an automatic cash transaction system capable of dealing with various types of transactions, which displays past transaction data in an external storage medium in response to the customer's operation so that necessary data is quickly searched.

The object is solved by claim 1. The dependent claims relate to advantageous embodiments and further developments of the invention.

In accordance with the present invention, an automatic cash transaction system includes a portable external storage medium for storing transaction data of a user and a terminal device, the terminal device including a unit for reading transaction data stored in the external storage medium, a unit for displaying the read transaction data, a unit for selecting data of at least one transaction out of displayed transaction data, a unit for storing the selected transaction data, a unit for allowing the user to modify at least a part of the selected transaction data before execution of a transaction, and a unit for writing transaction data used for the transaction into the external storage medium after the transaction has been executed on the basis of the selected transaction data.

Furthermore, in accordance with the present invention, an automatic cash transaction system includes a unit for inputting data relating to transaction of the user, a unit for storing inputted data, and a unit for controlling the unit for reading transaction data from the external storage medium on the basis of the inputted data, and if transaction data inputted by the user exist in the storage unit, then transaction data relating to the inputted data are selectively read and displayed, whereas if data inputted by the user do not exist in the storage unit, then a plurality of transaction data including transaction data relating to the inputted data are read and displayed.

Furthermore, in accordance with the present invention, a terminal device of an automatic cash transaction system includes a unit for printing transaction data read from the external storage medium.

In an automatic cash transaction system according to the present invention, transactions are performed on the basis of transaction data inputted by the user, by using an external storage medium storing various transaction data of past transactions such as deposits, transfers and withdrawals. The external storage medium sends, receives and records information by accessing the automatic cash transaction device.

In the automatic cash transaction system, transaction data are read from the external storage device and displayed and the user selects desired transaction data. In that case, displayed transaction data differs deponding upon the stage of manual operation of the user. In such a case that the user has not inputted data relating to the transaction at all yet and manual operation is at its first stage, transaction data of all kinds allowing transactions are displayed.

On the other hand, if the user has already inputted some data, only transaction data relating to that data are displayed.

If the transaction data that the user desires is found in the displayed data, the user immediately executes the transaction. If the pertinent data cannot be found, the user selects transaction data which can be utilized partially, partially modifies the specific data, and thereafter executes the transaction.

Data of the transaction executed by the user is newly stored in the external storage medium.

Furthermore, depending on the user's request, transaction data stored in the external storage medium are printed.

### BRIEF DESCRIPTION OF THE DRAWINGS

Fig. 1 is a hardware configuration diagram schematically showing an automatic cash transaction device forming a terminal device of an automatic cash transaction system according to an embodiment of the present invention;
Fig. 2 is a diagram showing the internal configuration of an external storage medium and an example of information stored therein according to an embodiment of the present invention;
Fig. 3 is a diagram showing the schematic configuration of an automatic cash transaction system according to an embodiment of the present invention;
Fig. 4 is a block diagram showing data processing conducted within an automatic cash transaction device according to an embodiment of the present invention;
Fig. 5 is a flow chart showing action and manual operation of a user in case of a transaction mode of an automatic cash transaction device according to an embodiment of the present invention;
Fig. 6 is a diagram showing an example of a display made by a display unit of an automatic cash transaction device according to an embodiment of the present invention;
Fig. 7 is a diagram showing an example of a display made by a display unit of an automatic cash transaction device according to an embodiment of the present invention;
Fig. 8 is a diagram showing an example of a display made by a display unit of an automatic cash transaction device according to an embodiment of the present invention;
Fig. 9 is a diagram showing an example of a display made by a display unit of an automatic cash transaction device according to an embodiment of the present invention;
Fig. 10 is a diagram showing an example of a display made by a display unit of an automatic cash transaction device according to an embodiment of the present invention;
Fig. 11 is a flow chart showing another example of action of an automatic cash transaction device according to an embodiment of the present invention;
Fig. 12 is a diagram showing an example of a display made by a display unit in another example of action of an automatic cash transaction device according to an embodiment of the present invention;
Fig. 13 is a diagram showing the configuration of an automatic cash transaction system according to another embodiment of the present invention;
Fig. 14 is a diagram showing the configuration of an automatic cash transaction system not using a portable external storage means; and
Fig. 15 is a flow chart showing an example of action of a device according to Fig. 14.

### DESCRIPTION OF THE PREFERRED EMBODIMENTS

Hereafter, the present invention will be described in more detail by referring to preferred embodiments.

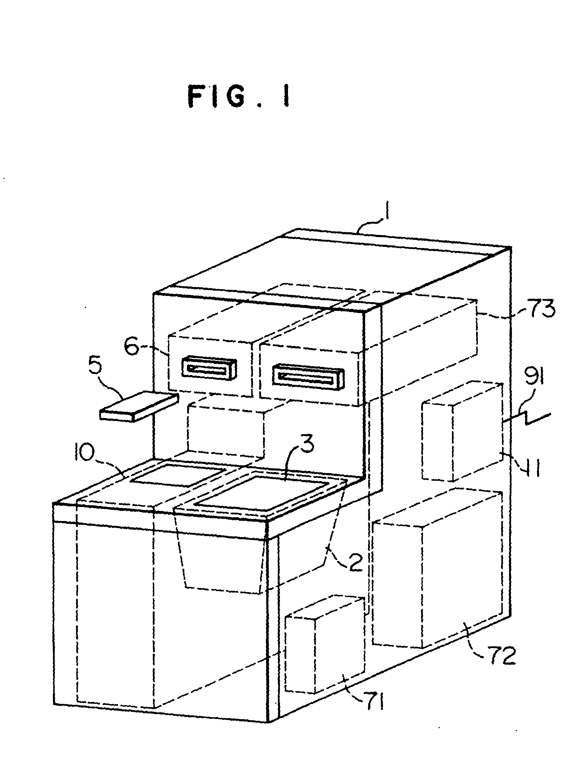

Fig. 1 is a diagram schematically showing an automatic cash transaction device forming a terminal device of an automatic cash transaction system according to an embodiment of the present invention.

Numeral 1 denotes an automatic cash transaction device.

Numeral 2 denotes a display unit. The display unit 2 is a display device for displaying keys and manual operation guides.

Numeral 3 denotes an input selection unit. The input selection unit 3 is a touch panel. When a user depresses a portion corresponding to one of various keys such as ten keys, character keys, and selection keys displayed on the display unit 2, manual operation for inputting and selection is conducted in the touch panel. Hereafter, depression of a portion of the input selection unit 3 corresponding to a key displayed on the display unit 2 is abbreviated to key depression.

Numeral 5 denotes an external storage medium carried by a user. The external storage medium 5 is an IC card used as a cash card.

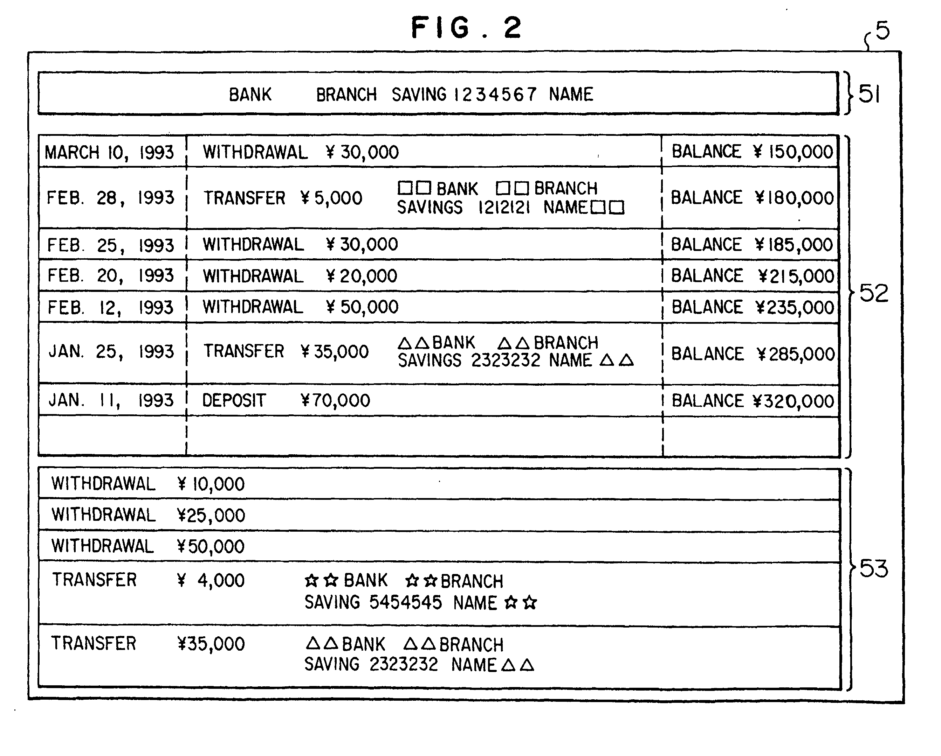

Fig. 2 shows the internal configuration of the external storage medium 5 and an example of information stored in the external storage medium 5. Within the external storage medium 5, a transaction account data storage unit 51, a transaction data storage unit 52, and a transaction data storage unit 53 are provided. The transaction data storage unit 52 is subjected to data protection made by a validation system using ICs. The user cannot rewrite data stored in the transaction data storage unit 52, whereas the user can rewrite data stored in the transaction data storage unit 53.

The transaction account data storage unit 51 stores data relating to a user's transaction account such as a bank name, branch name, kind of account, account number, and account name. The transaction data storage unit 52 whose transaction data cannot be rewritten by the user stores transaction data relating to various transactions such as transfer and withdrawal as well as transaction date and balance. By utilizing the present cash card instead of a passbook made of paper, therefore, history of transactions can be confirmed. In case the transaction data storage unit 52 whose data cannot be rewritten by the user has no empty storage space and hence the transaction data unit 52 is to be cleared, the rewritable transaction data storage unit 53 stores the transaction data to be cleared in order to keep the user from being unable to use transaction data stored until then in succeeding transactions. If a plurality of transactions having the same contents exist at this time, then all contents of one of the transactions are stored in order to minimize the amount of stored data.

With reference to Fig. 1, numeral 6 denotes an external storage medium read write unit. The external storage medium read write unit 6 is an IC card reader writer. The external storage medium read write unit 6 reads transaction account data from the transaction account data storage unit 51 included in the external storage medium 5 inserted by the user and reads transaction data from the transaction data storage unit 52. If transaction data desired by the user cannot be found in the transaction data storage unit 52, the external storage medium read write unit 6 reads transaction data from the transaction data storage unit 53. After execution of a transaction, a predetermined password is transmitted to the external storage medium 5 and writing permission is obtained from the validation system. Transaction data used in the transaction are thus newly appended to the data in the transaction data storage unit 52.

Numeral 10 denotes a cash handling unit. The cash handling unit 10 discriminates and counts cash. The cash handling unit 10 also receives cash thrown by the user and releases stored cash.

Numeral 11 denotes a unit for communicating with a host computer. Via a private line 91, the communication unit 11 is connected to a host computer of a head office. The communication unit 11 communicates with the host computer, and transmits and receives data relating to transactions.

Numeral 71 denotes a RAM. The memory area of the RAM 71 stores various data which will be described later.

Numeral 72 denotes a CPU. The CPU 72 exercises control over data read from the external storage medium which will be described later. The CPU 72 also exercises control over transaction execution, transaction data modification, and the automatic cash transaction device 1 as a whole.

Numeral 73 denotes a printing unit for printing transaction data read from the external storage medium 5, transaction date, and balance on paper.

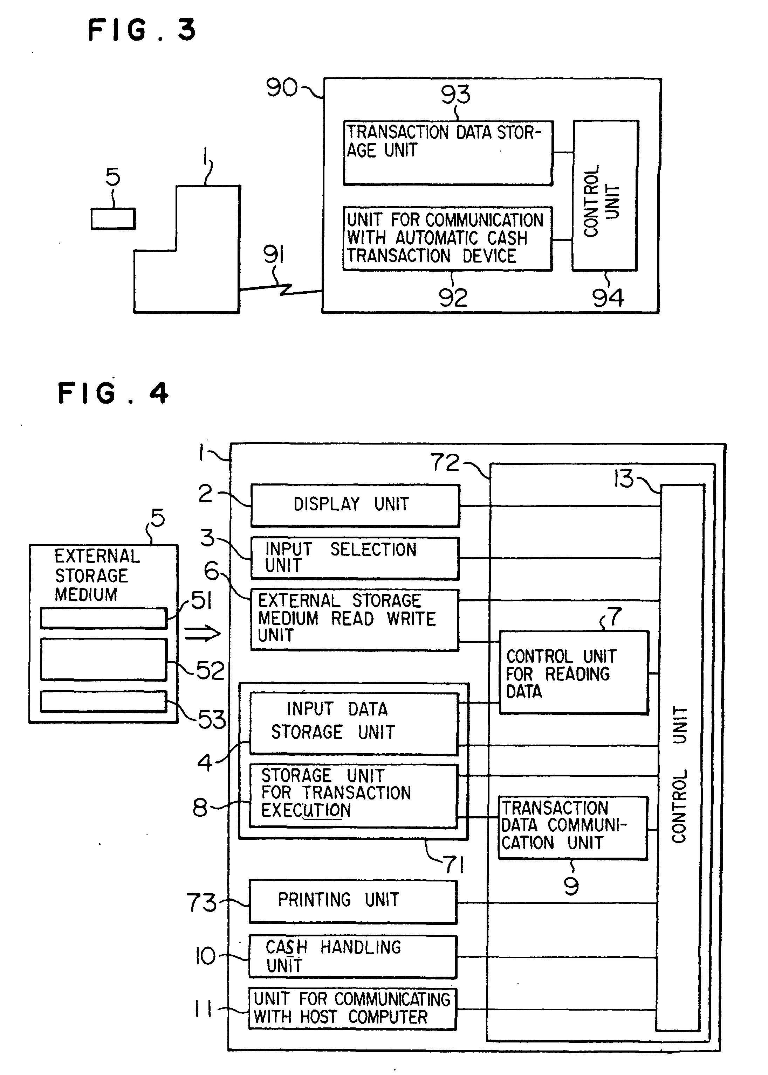

Fig. 3 is a diagram showing the schematic configuration of an automatic cash transaction system according to an embodiment of the present invention. By referring to Fig. 3, backup of transaction data in the external storage medium 5 will now be described.

Numeral 90 denotes a host computer. In the host computer system 90, a unit 92 for communicating with the automatic cash transaction device 1 and a transaction data storage unit 93 for recording transaction data for every account are disposed. In accordance with transaction data received from the automatic cash transaction device 1, a control unit 94 exercises account management, conducts transaction processing between banks, and stores transaction data used in the transaction, transaction date, and balance in the transaction data storage unit 93.

If data stored in the external storage medium 5 are destroyed and the external storage medium read write unit 6 cannot read transaction data from the transaction data storage unit 52, or if a transaction which does not use the external storage medium 5 is performed on the user's account after a transaction was performed by using the external storage medium the last time, then account data read from the transaction account data storage unit 51 by the external storage medium read write unit 6 are transmitted to the host computer system 90 and the host computer system 90 transmits transaction data which are not stored in the external storage medium 5 from the transaction data storage medium 93 of a pertinent account to the automatic cash transaction device 1. And the external storage medium read write unit 6 writes transaction data received by the unit 11 for communicating with the center in the transaction data storage unit 52 included in the external storage medium 5.

Fig. 4 is a block diagram showing data processing conducted within the automatic cash transaction device 1. Processing of data relating to a transaction will now be described by referring to Fig. 4.

Numeral 4 denotes an input data storage unit. The input data storage unit 4 stores data inputted by the user via the input selection unit 3.

Numeral 7 denotes a control unit for reading data. In the following manner, the read data control unit for reading data 7 controls the kind of transaction data to be read from the transaction data storage unit 52 and the transaction data storage unit 53 by the external storage medium read write unit 6. If the external storage medium 5 is inserted into the external storage medium read write unit 6, then first of all the control unit for reading data 7 accesses the input data storage unit 4. If the user does not input any data before the user inserts the external storage medium 5 and hence the input data storage unit 4 has no data, then the read data control unit for reading data 7 makes the external storage medium read write unit 6 read transaction data of all kinds for which transaction execution is possible. On the other hand, if the input data storage unit 4 has data, the read data control unit for reading data 7 makes the external storage medium read write unit 6 read transaction data relating to the data stored in the input data storage unit 4.

Transaction data read by the external storage medium read write unit 6 are displayed by the display unit 2. The user selects transaction data by depressing keys indicating desired transaction data.

If the user selects a mode for printing transaction data stored in the external storage medium 5 instead of a transaction mode, the control unit for reading data 7 exercises control in the following manner. First of all, the user inputs the kind of data to be printed via the input selection unit 3. The read data control unit for reading data 7 accesses the input data storage unit 4 and makes the external storage medium read write unit 6 read data relating to the above described data. If the user has not especially inputted a kind of data to be printed, the read data control unit 7 makes the external storage medium read write unit 6 read transaction data of all kinds. Transaction data thus read are sent to the printing unit 73 and printed.

As for order of the display of transaction data made by the display unit 2, order of transaction date, order of transaction frequency, or order preset by the user is considerable. In case of this example, however, displays are made in order of transaction date, beginning with the latest. If transaction data read by the external storage medium read write unit 6 include transaction data sets having the same contents, only one data set is displayed without duplication in order to display transaction data of as many kinds as possible in one screen.

Numeral 8 denotes a data storage unit for transaction execution which stores transaction data selected by the user until transaction execution.

Numeral 9 denotes a transaction data modification unit. The transaction data modification unit 9 retrieves an item specified by the user via the input selection unit 3 and included in transaction data stored in the data storage unit 8 for transaction execution and overwrites data for modification inputted by the input selection unit 3.

Numeral 13 denotes a control unit for controlling the above described units included in the automatic cash transaction device 1.

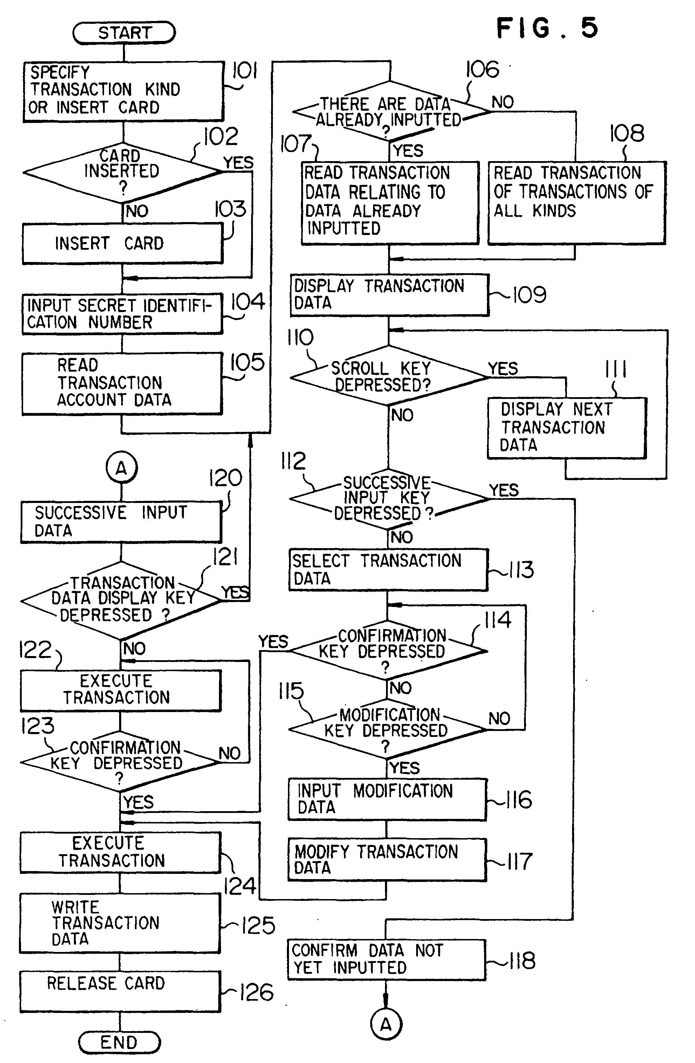

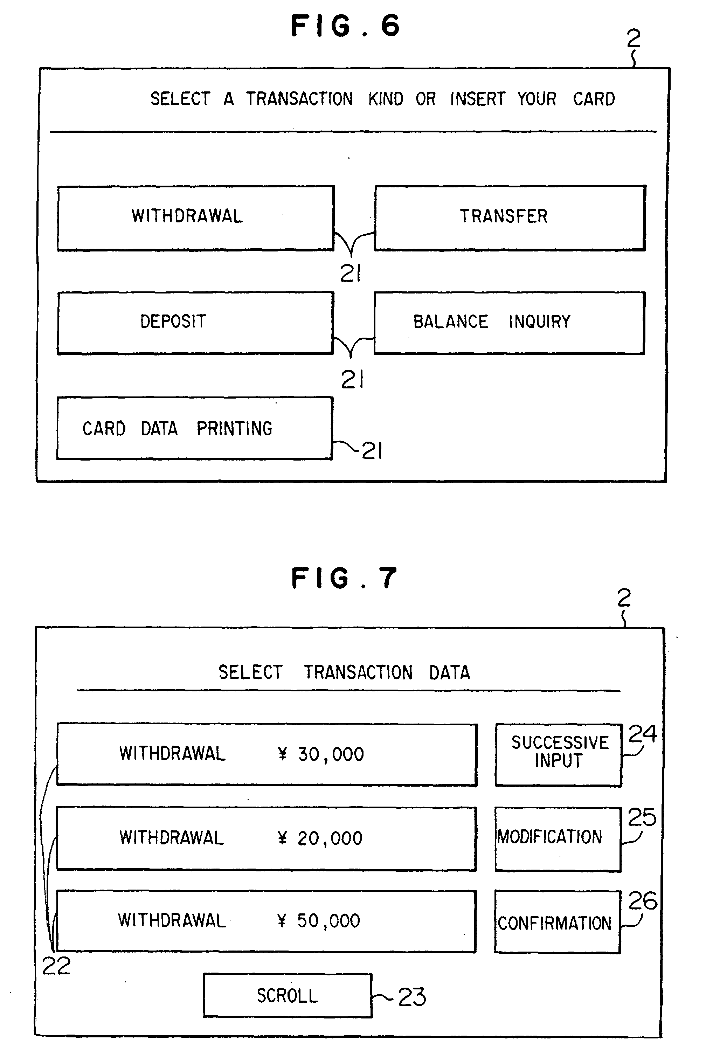

Fig. 5 is a flow chart showing action and manual operation of the user of the automatic cash transaction device 1 in the transaction mode. Figs. 6 to 10 are diagrams showing examples of a display made by the display unit 2 of the automatic cash transaction device 1 in respective manual operation stages of the user. Action of the automatic cash transaction device 1, manual operation of the user, and the display made by the display unit 2 will now be described by referring to Figs. 5 to 10.

First of all, the user is urged to either select a kind of transaction by using the input selection unit 3 or insert the external storage medium 5 into the external storage medium read write unit 6. In drawings, the external storage medium is abbreviated to card. Fig. 6 shows an example of a display made by the display unit 2 at that time. Numeral 21 denotes transaction selecting keys. Each key indicates a kind of transaction which can be executed. The user selects a kind of transaction by depressing a key indicating the desired transaction. The user either selects a kind of transaction or inserts the external storage medium 5 (step 101).

Thereupon, the control unit 13 checks states of the input selection unit 3 and the external storage medium read write unit 6, and determines whether the user has selected a transaction kind or inserted the external storage medium 5 (step 102).

In case the user has selected a transaction kind, a guide for urging the user to insert the external storage medium 5 is displayed and the user inserts the external storage medium 5 (step 103).

When the user is judged at step 102 to have inserted the external storage medium 5, and when the user has inserted the external storage medium 5 at step 103, processing proceeds to secret identification number inputting. The display unit 2 displays a guide for urging the user to input the user's secret identification number, and the user inputs the secret identification number (step 104).

Then the external storage medium read write unit 6 reads transaction account data from the transaction account data storage unit 51 included in the external storage medium 5 (step 105).

Thereafter, the control unit for reading data 7 accesses the input data storage unit 4 to determine whether there are data stored therein. If the user has inserted the external storage medium at step 101, there are no stored data. If the user has selected a kind of transaction at step 101, the selected kind of transaction exists in the input data storage unit 4 (step 106).

If there are data stored in the input data storage unit 4, the control unit for reading data 7 controls the external storage medium read write unit 6 so that only transaction data relating to the data stored in the input data storage unit 4 may be read from the transaction data storage unit 52 included in the external storage medium 5 and, as occasion demands, from the transaction data storage unit 53 (step 107).

If there are no data stored in the input storage unit 4, the control unit for reading data 7 controls the external storage medium read write unit 6 so that transaction data of all kinds for which transactions can be executed may be read from the transaction data storage unit 52 included in the external storage medium 5 and, as occasion demands, from the transaction data storage unit 53 (step 108).

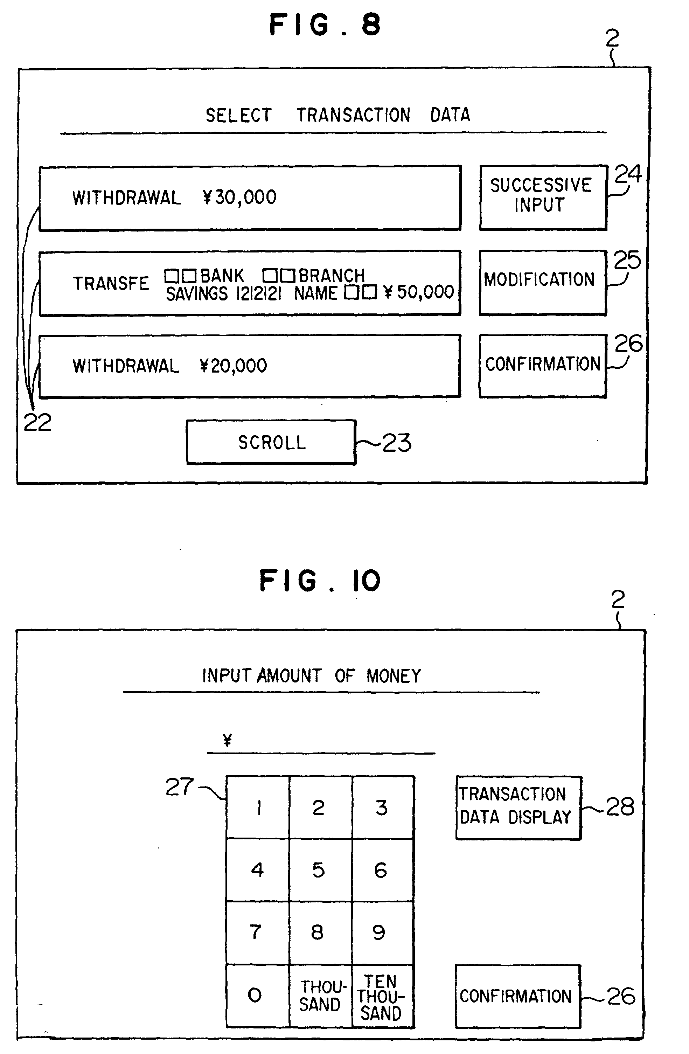

Then, the display unit 2 displays transaction data read from the transaction data storage unit 52. Fig. 7 shows an example of a display made when the user has selected a withdrawal transaction at step 101. Fig. 8 shows an example of a display made when the user has not selected any kind of transaction but has inserted the external storage medium 5. Numeral 22 denotes a transaction data selection key. Each key represents transaction data read from the transaction data storage unit 52. In Fig. 7, only withdrawal transaction data are shown. In Fig. 8, transaction data of all kinds for which transactions can be executed are shown. The user selects transaction data by depressing a key indicating desired transaction data. Numeral 23 denotes a scroll key. By depressing the scroll key 23, transaction data of the next screen are displayed. Numeral 24 denotes a successive input key. By depressing the successive input key 24, switching over is conducted to a screen for inputting transaction data one by one. Numeral 25 denotes a modification key for ordering transaction data selected by a transaction data selection key 22 to be modified. Numeral 26 denotes a confirmation key for confirming transaction data and ordering transaction execution to be started (step 109).

If desired transaction data is not found in the displayed transaction data, the user depresses the scroll key 23 (step 110).

If the scroll key 23 is depressed, transaction data to be displayed subsequently are displayed (step 111). And processing returns to step 110.

In case transaction data are to be inputted one by one in order to perform a new transaction having contents different from that transactions performed in the past, the user depresses the successive input key 24 (step 112).

If desired transaction data or transaction data which does not completely coincide with the desired transaction data but partially coincide with the desired transaction data is included in displayed transaction data, the user selects pertinent transaction data by using a transaction data selection key 22. The selected transaction data is stored in the data storage unit 8 for transaction execution (step 113).

If the user uses the selected transaction data as it is without modifying it in transaction execution, the user depresses the confirmation key 26 (step 114).

Thereupon, the control unit 13 transmits transaction account data and transaction data stored in the data storage unit 8 for transaction execution to the host computer system 90 of the center via the unit 11 for communicating with the host computer. Furthermore, on the basis of transaction data stored in the data storage unit 8 for transaction execution, the control unit 13 makes the cash handling unit 10 discriminate and count cash and receive cash thrown by the user and release stored cash. In the host computer 90, transaction processing is conducted on the pertinent account on the basis of received data (step 124).

Furthermore, in the host computer 90, transaction data accumulated since transaction was performed the last time by using the external storage medium 5 are transmitted to the automatic cash transaction device 1. The external storage medium read write unit 6 writes transaction data received from the hose computer system 90 and transaction data used in the transaction into the transaction data storage unit 52 (step 125).

Finally, the external storage medium 5 and media such as cash and a statement are released, and the transaction is finished (step 126).

If it is necessary to modify transaction data selected at step 113, the user depresses the modification key 25 (step 115).

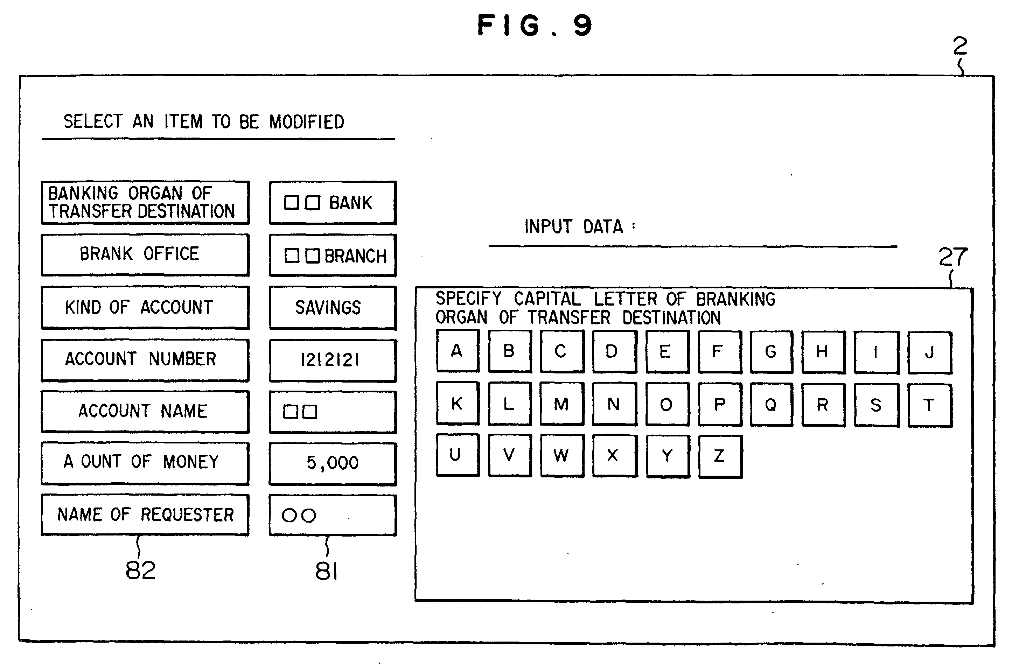

Fig. 9 shows an example of a display made by the display unit 2 in case transfer transaction data is to be modified. Numeral 81 denotes an area for displaying transaction data before modification. Numeral 82 denotes modification item specifying keys for specifying a modification item. Numeral 27 denotes transaction data input keys for inputting modification data. If the user has depressed the modification key 25, transaction data stored in the data storage unit 8 for transaction execution are first displayed on the area 81 for displaying transaction data before modification. When the user has then specified an item to be modified by using a modification item specifying key 82, the display unit 2 displays transaction data input keys 27 required to input data of the specified item. The user inputs modification data by using the transaction data input keys 27 (step 116).

By using inputted modification data, the transaction data modification unit 9 modifies transaction data stored in the data storage unit 8 for transaction execution (step 117). Thereafter, processing of step 124 and succeeding steps is conducted.

If the user depresses the successive input key 24 at step 112, the control unit 13 first accesses the input data storage unit 4 to examine data which have not been inputted yet and controls a manual operation guiding screen to be displayed on the display unit 2 (step 118).

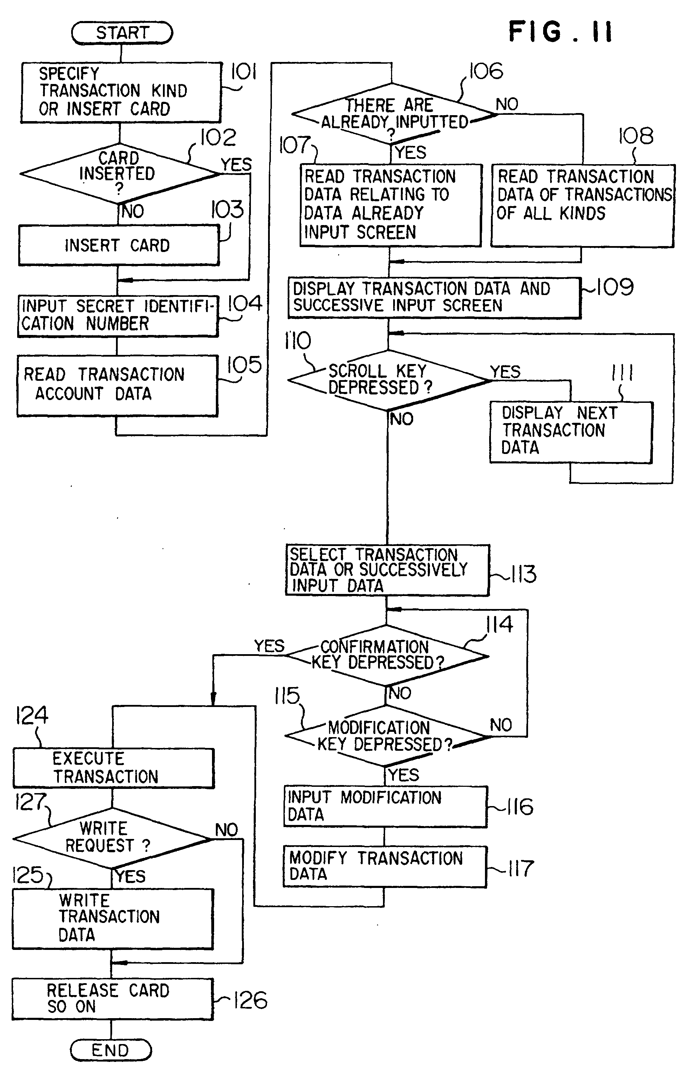

The display unit 2 displays a manual operation guide screen for inputting data which have not been inputted yet and thereby urges the user to input data. For example, if a kind of transaction has not been selected yet, kinds of transaction are displayed to urge the user to make a selection. Furthermore, if a kind of transaction has been selected but other data have not been inputted, the transaction data input keys 27 for inputting data required for that transaction are displayed. Fig. 10 shows an example of a display made when the withdrawal transaction has been selected. Numeral 28 denotes a transaction data display key for returning to the transaction data selection screen.

If the user wants to return to the transaction data selection screen, the user depresses the transaction data display key 28 (step 121). Thereupon, processing returns to step 106.

If the user does not want to return to the transaction data selection screen, the user inputs transaction data one by one by depressing the transaction data input keys 27 (step 122). When all of necessary data have been inputted, input data stored in the input data storage unit 4 are transferred to the data storage unit 8 for transaction execution.

After the user has confirmed contents of inputted data, the user depresses the confirmation key 26 (step 123). Thereafter, processing of step 124 and succeeding steps is conducted.

According to the present embodiment, the user can input modification data while referring to transaction data stored before modification, data input being thus facilitated.

Furthermore, since in the present embodiment a display is made so that transaction data of contents may not be duplicated, the user can search desired transaction data efficiently.

Furthermore, as for transactions performed by the user frequently, there is a high possibility that they have been performed recently as well. Displays of transaction data are made in order of transaction execution data, beginning with the latest. Therefore, transaction data having high possibility of its being performed can be displayed preferentially.

According to the present embodiment, the external storage medium 5 can be used as means for recording transaction history. By using a personal computer on hand and an exclusive IC card reader writer connected to the personal computer, therefore, transaction history can be advantageously confirmed freely. In addition, because of electronic information, transaction history can be advantageously seen after it has been processed into an intelligible form. Furthermore, in the automatic cash transaction device 1, transaction data of an arbitrary kind stored in the external storage medium 5 can be printed and seen.

In addition, even if data stored in the external storage medium 5 are destroyed, they can be restored by means of backup, resulting in feeling of security.

In the present embodiment, the transaction data storage unit 52 is disposed in the external storage medium 5 to store transaction data. Alternatively, transaction data stored in the transaction data storage unit 93 in the host computer 90 may be received via the communication unit 11 and used.

In the present embodiment, the data storage unit 8 for transaction execution is disposed in the automatic cash transaction device. Alternatively, it may be disposed in the external storage medium 5.

Furthermore, in the present embodiment, the input selection unit 3 is a touch panel. Alternatively, the input selection unit 3 may be a button type key or an audio input device.

Furthermore, the order in which the transaction data read write unit 6 reads transaction data from the transaction data storage unit 52 and the order in which the display unit 2 displays transaction data may be order of reducing transaction frequency or order determined arbitrarily by the user.

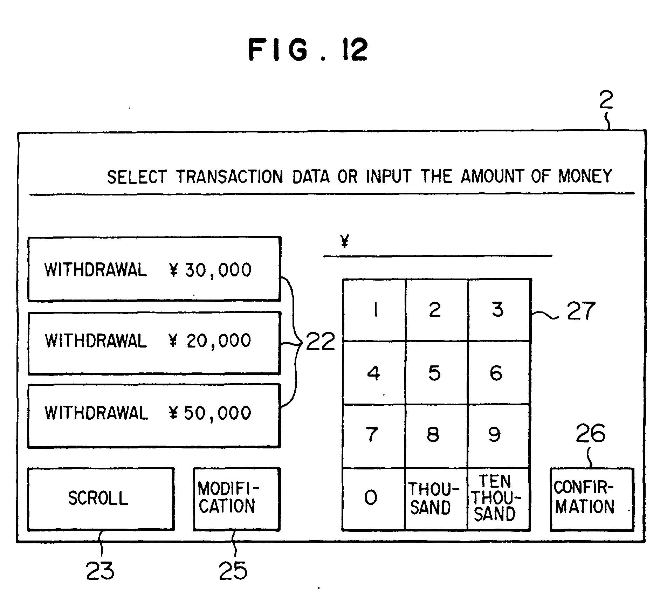

Fig. 11 is a flow chart showing another example of operation of the automatic cash transaction device 1. Fig. 12 shows an example of a display made by the display unit 2 in case of the operation example of Fig. 11.

Another operation example of the automatic cash transaction device 1 will now be described by referring to Figs. 11 and 12.

In the present operation example, transaction data read from the external storage medium 5 and the transaction data input keys 27 are displayed in parallel unlike the operation example of Fig. 5. Fig. 12 is a diagram showing an example of its display.

The operation example of Fig. 11 differs from that of Fig. 5 in that step 112 and steps 118 to 123 are eliminated and the transaction data input keys 27 are displayed in parallel to transaction data read from the external storage medium 5 at step 109. Furthermore, the operation example of Fig. 11 differs from that of Fig. 5 in that the user either selects transaction data or inputs transaction data one by one by using the transaction input keys 27 in step 113. Furthermore, the operation example of Fig. 11 differs from that of Fig. 5 in that step 125 is executed selectively. That is to say, addition of transaction data to the external storage medium 5 is made only when the user has specified it in step 127. Other steps are the same as those of Fig. 5 and hence will not be described.

According to the present embodiment, the user can input transaction data by using the above described successive input key 24 and transaction data display key 28. Without switching over screens, therefore, the user can input transaction data arbitrarily by using either a method of selecting transaction data or a method of inputting transaction data.

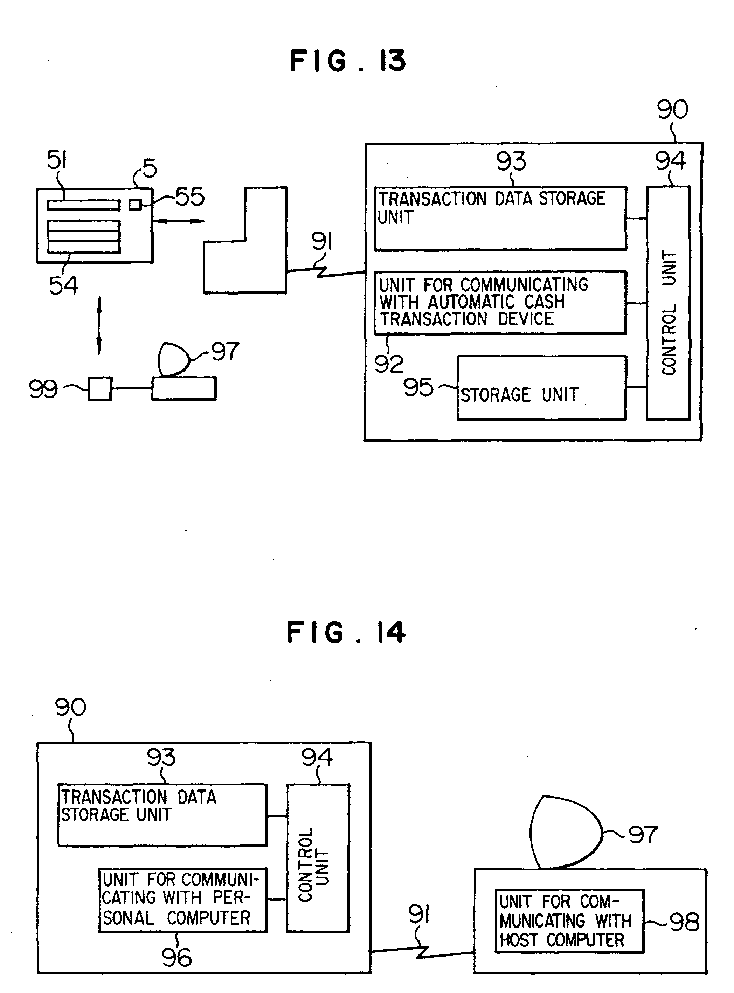

Fig. 13 is a diagram showing the configuration of an automatic cash transaction system according to another embodiment of the present invention.

An automatic cash transaction system according to another embodiment of the present embodiment will now be described by referring to Fig. 13.

Numeral 1 denotes an automatic cash transaction device 1 shown in Fig. 1. The hardware configuration of the automatic cash transaction device 1 and data processing conducted therein are the same as those described before.

Numeral 5 denotes an IC card forming an external storage medium. In the external storage medium 5, a transaction data storage unit 54 for storing transaction data in areas different depending on respective kinds is disposed. The external storage medium 5 also incorporates a transaction data comparison and administration unit 55 for exercising control to compare transaction data to be added to the transaction data storage unit 54 by the external storage medium read write unit 6 of the automatic cash transaction device 1 with transaction data already stored in the transaction data storage unit 54, prohibit appending if there is the same data, and permit appending unless there are the same data. Therefore, the same data are not duplicated and transaction data is stored so as to be associated with its kind. When the external storage medium read write unit 6 reads transaction data of a particular kind from the kind-associated transaction data 54, therefore, reading can be done efficiently.

If a common format is used among banks for the kind-associated transaction data storage unit 54, transaction data used before can be used even when the user utilizes an automatic cash transaction device 1 of another bank.

Numeral 97 denotes a personal computer on hand of the user.

Numeral 99 denotes an external storage medium read write unit connected to the personal computer 97.

By using the personal computer 97 and the external storage medium read write unit 99, the user confirms the transaction data stored in the external storage medium 5 and inputs beforehand a transaction to be performed later.

Numeral 90 denotes a host computer system. In the host computer 90, a storage unit 95 is disposed. In case the user has performed a transaction without using the external storage medium 5, the storage unit 95 temporarily stores transaction data of that user. In the same way as transaction data stored in the external storage medium 5, transaction data stored in the user-associated storage unit 95 can be used to input transaction data by receiving it from the host computer system via the unit 11 for communicating with the center. As for the case where a transaction is performed without using the external storage medium 5, there is the case where a transaction is performed by a tellor at a counter by using a passbook and the case where cash transfer is made. In the latter case, the user is made to input a specific number and the user is discriminated.

When the user performs a transaction next time by using the external storage medium 5, transaction data stored in the storage unit 95 are copied to the external storage medium 5.

According to the present embodiment, the user can arbitrarily read and write the transaction data 54. Before a transaction is performed by using the automatic cash transaction device 1, therefore, the user can write beforehand transaction data expected to be used thereafter, by using the personal computer 97 on hand and the external storage medium read write unit 99. As a result, the transaction can be completed speedily in front of the automatic cash transaction device 1.

According to the present embodiment, the user can input transaction data by using transaction data used before, even if the user has not the external storage medium 5.

Besides an IC card, the external storage unit may be a magnetic card, an optical card, a memory card, a microfloppy disk or an electronic pocketbook so long as it can store information.

In the present embodiment, the user may select whether transaction data should be written into the external storage medium or not.

Fig. 14 is a diagram showing the configuration of an automatic cash transaction system not using a portable external storage means.

Numeral 96 denotes a unit for communicating with the personal computer 97. The unit 96 is disposed in the host computer system 90. Numeral 98 denotes a unit for communicating with the host computer system 90. The unit 98 is disposed in the personal computer 97.

The personal computer 97 can thus communicate with the host computer 90. On the personal computer 97, therefore, the user can perform transactions which are included in transactions performed by using the automatic cash transaction device 1 and which do not involve cash.

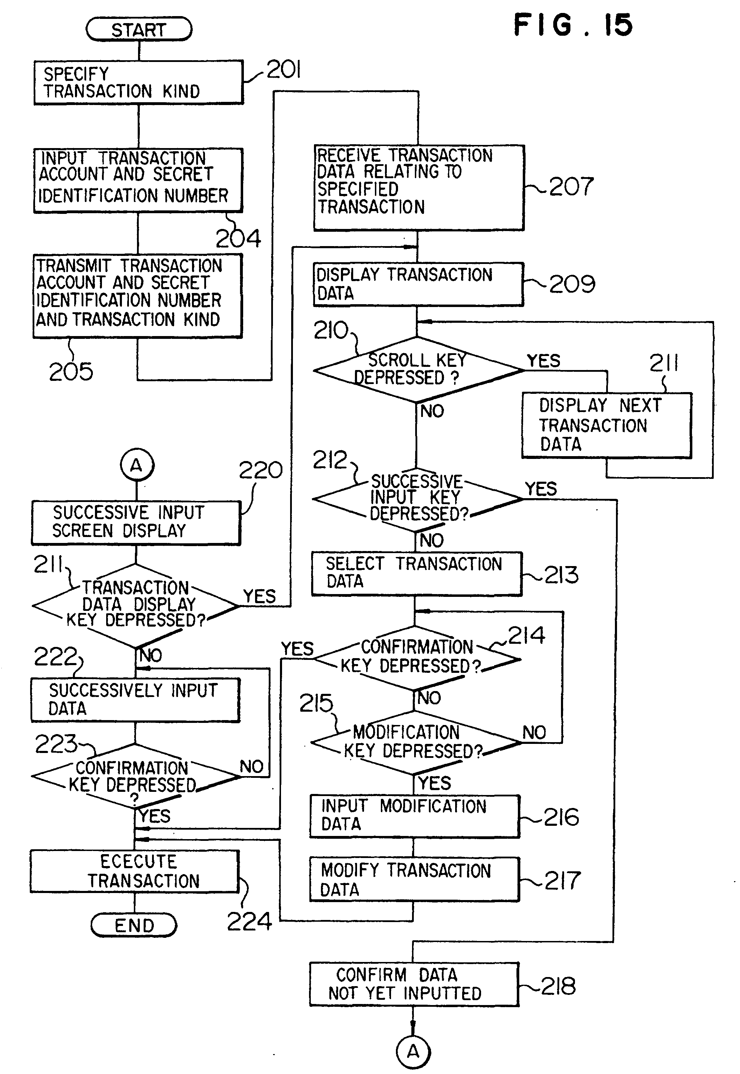

Fig. 15 is a flow chart showing action of the personal computer 97 and manual operation of the user in case a transaction is performed on the personal computer 97. The action of the personal computer 97 and manual operation of the user will now be described by referring to Fig. 15.

First of all, the user specifies a kind of transaction (step 201). Then the user inputs transaction account data and the secret identification number (step 204). Thereupon, the unit 98 for communicating with the host computer transmits the transaction account data, the secret identification number, and the kind of the transaction to be performed (step 205).

From the host computer system 90, the unit 98 for communicating with the host computer receives transaction data relating to the transaction performed by the user included in transaction data stored in the transaction data storage unit 93 (step 207). The personal computer 97 displays the received transaction data (step 209).

If desired transaction data are not included in the displayed transaction data, the user depresses the scroll key 23 (step 210). If the scroll key 23 is depressed, transaction data to be displayed subsequently are displayed (step 211). And processing returns to step 210.

If the user wants to input transaction data one by one, the user depresses the successive input key (step 212). Otherwise, the user selects desired transaction data (step 213).

Selected transaction data are stored in a memory included in the personal computer 97. If the user wants to perform a transaction by using the selected transaction data, the user depresses the confirmation key (step 214).

The personal computer 97 transmits transaction data to the host computer 90. On the basis of the received transaction data, the host computer 90 conducts transaction processing on the user's account and additionally writes transaction data into the transaction data storage unit 93 (step 224).

If the user desires modification at step 214, the user depresses the modification key (step 215). If the modification key is depressed, modification data are inputted (step 216). The personal computer writes the inputted modification data over transaction data stored in the memory (step 217). And processing proceeds to step 224.

If the successive input key is depressed at step 212, data which are not inputted yet are confirmed (step 218). And a screen for inputting data one by one is displayed (step 220).

If the user wants to return to selection of transaction data, the user depresses the transaction data display key (step 221). And processing returns to step 209. Otherwise, the user inputs data one by one (step 222). If inputting is completed, the user depresses the confirmation key (step 223). Processing proceeds to step 224.

According to the present embodiment, transaction data can be inputted to perform a transaction by using an input method similar to that of the automatic cash transaction device 1 even when a personal computer is used.

In the present embodiment, a personal computer was used. Alternatively, the device for communicating with the host computer 90 may be a different information processing device such as an electronic pocketbook.

Accordindly, the user can obtain displays in a method facilitating transaction data finding by changing the manual operation method according to the priority order of display of the transaction to be performed by the user. Even if transaction data relating to various transactions are stored in the transaction data storage unit, therefore, the user can select easily transaction data and execute the transaction by using as few manual operations as possible. This results in an effect that labor of users is lightened in various transactions and the time required for transactions can be shortened.

Furthermore, the user can modify selected transaction data and use it. Even in performing such a new transaction that completely coincident transaction data are not stored in the transaction data storage unit, therefore, the user can simply input transaction data by using partially coincident transaction data and execute the transaction, resulting in an effect.

Furthermore, the user can print only data the user needs out of the transaction history. This results in an effect that the account can be easily administered.

## Claims

1. An automatic cash transaction system comprising:
a portable external storage means (5) for storing a plurality of transaction data of a user, whereby each transaction data is pertaining to a different transaction performed in the past; and
a terminal device (1), said terminal device comprising:
means (6) for reading the past transaction data stored in said external storage means (5);
means (2) for displaying a plurality of the read past transaction data;
means (3, 22) for selecting one of the displayed transaction data;
means (8) for temporarily storing the selected transaction data until transaction execution,
means (9, 25, 27, 82) for modifying at least a part of said selected transaction data;
means (13, 10, 72, 90) for processing a cash transaction in accordance with the modified transaction data; and
means (6) for appending said modified transaction data to the transaction data already stored in said external storage means (5).

2. An automatic cash transaction system according to claim 1, wherein said terminal device (1) comprises:
means (3) for inputting data relating to transaction of a user;
means (4) for storing the inputted data; and
means (7) for reading transaction data from said external storage means (5) on the basis of said inputted data, and
wherein, if transaction data inputted by the user exist in said means (4) for storing the inputted data, transaction data relating to said inputted data are selectively read and displayed, and
if transaction data inputted by the user do not exist in said means (4) for storing the inputted data, a plurality of transaction data including transaction data relating to the inputted data are read and displayed.

3. An automatic cash transaction system according to claim 1, wherein said terminal device (1) further comprises means (73) for printing read transaction data.

4. An automatic cash transaction system according to claim 1, comprising:
said terminal device (1);
a host computer (90) connected to said terminal device via communication unit (11) to receive transaction data and execute transaction processing, said host computer having transaction data storage means (93) for storing data relating to the processed transaction;
said external storage means (5) comprising an IC card, said IC card comprising transaction data storage means (52) said transaction data is protected by a validation system so as to prohibit modification by the user; and
transaction data stored in said transaction data storage means (93) in said host computer (90) but not stored in transaction storage means (52) in said IC card (5) is copied from said transaction data storage means (93) in said host computer into said transaction data storage means (52) in said IC card (5).

5. An automatic cash transaction system according to claim 4, wherein
readable and writable transaction data storage means (53) is disposed in said IC card (5), and
one of transaction data stored in said transaction data storage means (52) having the same contents is copied to said readable and writable transaction data storage means (53).

6. An automatic cash transaction system according to claim 1 or 2, wherein, if contents of a plurality of said transaction data are substantially same, one of the transaction data is displayed.

7. An automatic cash transaction system according to claim 1, wherein said external storage means (5) comprises an IC card, a magnetic card, an optical magnetic card, or a microfloppy disk.

8. An automatic cash transaction system according to claim 1, wherein transaction data used in said transaction are stored in said external storage means (5) only when a stored instruction is inputted by the user or only when said transaction data are different from transaction data already stored in said external storage means (5).

9. An automatic cash transaction system according to claim 1 or 8, comprising:
said terminal device (1);
a host computer system (90) connected to said terminal device via communication unit (11) to receive transaction data and execute transaction processing; and
transaction data storage means (95) provided in said host computer to store transaction data whereby,
if the user performs a transaction without using said external storage means (5), then transaction data stored in said transaction data storage means (95) of said host computer (90) is received via the communication unit (11) and transaction data used in execution of a transaction are stored in said transaction data storage means (95) in said host computer (90) via the communication unit (11), and
if the user performs a transaction by using said external storage means (5), then contents of said transaction data storage means (95) are copied to said external storage means (5).

10. An automatic cash transaction system according to claim 1 or 2, wherein displays of said transaction data are made in order of transaction execution date, beginning with the latter.

11. An automatic cash transaction system according to claim 1, comprising means (2) for displaying said selected transaction data, whereby transaction data before modification are always displayed while the user is modifying the transaction data.

## Patentansprüche

1. Automatisches Bargeschäftssystem mit
einem tragbaren externen Speichermittel (5) zum Speichern einer Vielzahl von Transaktionsdaten eines Benutzers, wobei jede der Transaktionsdaten eine andere in der Vergangenheit ausgeführte Transaktion betrifft; und
einem Endgerät (1), das enthält:
Mittel (6) zum Lesen der früheren Transaktionsdaten, die im externen Speichermittel gespeichert sind (5);
Mittel (2) zur Anzeige einer Vielzahl der gelesenen früheren Transaktionsdaten;
Mittel (3, 22) zur Auswahl einer der angezeigten Transaktionsdaten;
Mittel (8) zur vorübergehenden Speicherung der ausgewählten Transaktionsdaten bis zur Ausführung der Transaktion,
Mittel (9, 25, 27, 82) zur Änderung wenigstens eines Teils der ausgewählten Transaktionsdaten;
Mittel (13, 10, 72, 90) zur Verarbeitung einer Bar-Transaktion in Übereinstimmung mit den veränderten Transaktionsdaten; und
Mittel (6) zum Hinzufügen der veränderten Transaktionsdaten zu den bereits im externen Speichermittel (5) gespeicherten Transaktionsdaten.

2. Automatisches Bargeschäftssystem nach Anspruch 1, wobei das Endgerät (1) enthält:
Mittel (3) zur Eingabe von sich auf die Transaktion eines Benutzers beziehenden Daten;
Mittel (4) zur Speicherung der eingegebenen Daten; und
Mittel (7) zum Lesen der Transaktionsdaten aus dem externen Speichermittel (5) auf der Grundlage der eingegebenen Daten, wobei, wenn die vom Benutzer eingegebenen Transaktionsdaten im Speichermittel (4) für eingegebene Daten vorhanden sind, Transaktionsdaten in Verbindung mit den eingegebenen Daten selektiv gelesen und angezeigt werden, und wenn die vom Benutzer eingegebenen Transaktionsdaten im Speichermittel (4) für eingegebene Daten nicht vorhanden sind, eine Vielzahl von Transaktionsdaten einschließlich von mit den eingegebenen Daten in Beziehung stehenden Transaktionsdaten gelesen und angezeigt werden.

3. Automatisches Bargeschäftssystem nach Anspruch 1, wobei das Endgerät (1) Mittel zum Drucken gelesener Transaktionsdaten (73) aufweist .

4. Automatisches Bargeschäftssystem nach Anspruch 1, mit einem Endgerät (1);
einem mit dem Endgerät via Kommunikationseinheit (11) verbundenen Zentralrechner (90) zum Empfang von Transaktionsdaten und zum Ausführen von einer Transaktionsverarbeitung, wobei der Zentralrechner Transaktionsdatenspeichermittel (93) zum Speichern von in Verbindung mit der verarbeiteten Transaktion stehenden Daten aufweist;
ein externes Speichermittel (5) mit einer IC-Karte, die ein Transaktionsdatenspeichermittel (52) aufweist, wobei die Transaktionsdaten durch ein Berechtigungssystem geschützt sind, um Änderung durch den Benutzer zu verhindern; wobei im Transaktionsdatenspeichermittel (93) im Zentralrechner (90) gespeicherte Transaktionsdaten, die aber nicht im Transaktionsdatenspeichermittel (52) in der IC-Karte (5) gespeichert sind, vom Transaktionsdatenspeichermittel (93) im Zentralrechner (90) in die Transaktionsdatenspeichermittel (52) in der IC-Karte (5) kopiert werden.

5. Automatisches Bargeschäftssystem nach Anspruch 4, wobei lesbare und beschreibbare Transaktionsdatenspeichermittel (53) auf der IC Karte (5) vorgesehen sind, und
ein Datum der im Transaktionsdatenspeichermittel (52) gespeicherten Transaktionsdaten mit denselben Inhalten in das lesbare und beschreibbare Transaktionsdatenspeichermittel (53) kopiert wird.

6. Automatisches Bargeschäftssystem nach Anspruch 1 oder 2, wobei, wenn die Inhalte einer Vielzahl der Transaktionsdaten im wesentlichen gleich sind, eine dieser Transaktionsdaten angezeigt wird.

7. Automatisches Bargeschäftssystem nach Anspruch 1, wobei das externe Speichermittel (5) eine IC-Karte, eine magnetische Karte, eine optische magnetische Karte oder eine Mikro-Floppydisk aufweist.

8. Automatisches Bargeschäftssystem nach Anspruch 1, wobei für die Transaktion gebrauchte Transaktionsdaten nur im externen Speichermittel (5) gespeichert werden, wenn eine gespeicherte Anweisung vom Benutzer eingegeben wird oder wenn die Transaktionsdaten sich von den bereits im externen Speichermittel (5) gespeicherten Transaktionsdaten unterscheiden.

9. Automatisches Bargeschäftssystem nach Anspruch 1 oder 8, mit einem Endgerät (1);
einem mit dem Endgerät via Kommunikationseinheit (11) verbundenen Zentralrechner (90) zum Empfang von Transaktionsdaten und zum Ausführen von Transaktionsverarbeitung; und
im Zentralrechner (90) vorgesehene Transaktionsdatenspeichermittel (95) zur Speicherung von Transaktionsdaten, wobei, wenn der Benutzer ohne das externe Speichermittel (5) eine Transaktion ausführt, die in dem Transaktionsdatenspeichermittel (95) im Zentralrechner (90) gespeicherten Transaktionsdaten via der Kommunikationseinheit (11) empfangen und in der Ausführung einer Transaktion benutzte Transaktionsdaten in dem Transaktionsdatenspeichermittel (95) im Zentralrechner (90) via Kommunikationseinheit (11) gespeichert werden, und, wenn der Benutzer eine Transaktion unter Benutzung des externen Speichermittels (5) ausführt, die Inhalte von dem Transaktionsdatenspeichermittel (95) in das externe Speichermittel (5) kopiert werden.

10. Automatisches Bargeschäftssystem nach Anspruch 1 oder 2, wobei die Anzeigen der Transaktionsdaten in der Reihenfolge des Datums der Transaktionsausführung erfolgen, beginnend mit dem letzten.

11. Automatisches Bargeschäftssystem nach Anspruch1, mit Mitteln (2) zur Anzeige ausgewählter Transaktionsdaten, wobei, während der Benutzer die Transaktionsdaten verändert, Transaktionsdaten vor Veränderung immer angezeigt werden.

## Revendications

1. Système automatique de transaction d'espèces comprenant :
un moyen de stockage externe portable (5) pour stocker une pluralité de données de transaction d'un utilisateur, chaque donnée de transaction concernant une transaction différente réalisée dans le passé ; et
un dispositif terminal (1), ledit dispositif comprenant :
un moyen (6) de lecture des données de transaction passées stockées dans ledit moyen de stockage externe (5) ;
un moyen (2) d'affichage d'une pluralité de données de transaction passée lues ;
des moyens (3, 22) de sélection d'une des données de transaction affichées ;
un moyen (8) pour stocker temporairement les données de transaction sélectionnées jusqu'à exécution de la transaction,
des moyens (9, 25, 27, 82) pour modifier au moins une partie desdites données de transaction sélectionnées ;
des moyens (13, 10, 72, 90) pour traiter une transaction d'espèces selon les données de transaction modifiées ; et
un moyen (6) de joindre lesdites données de transaction modifiées aux données de transaction déjà stockées dans ledit moyen de stockage externe (5).

2. Système automatique de transaction d'espèces selon la revendication 1, où le dispositif terminal (1) comprend :
un moyen (3) pour entrer des données concernant la transaction d'un utilisateur ;
un moyen (4) pour stocker les données entrées ; et
un moyen (7) pour lire les données de transaction provenant desdits moyens de stockage externe (5) sur la base desdites données entrées, et
dans lequel si les données de transaction entrées par l'utilisateur existent dans lesdits moyens (4) de stockage des données entrées, les données de transaction concernant lesdites données entrées sont lues sélectivement et affichées, et
si les données de transaction entrées par l'utilisateur n'existent pas dans lesdits moyens (4) de stockage des données entrées, une pluralité de données de transactions comprenant les données de transaction concernant les données entrées est lue et affichée.

3. Système automatique de transaction d'espèces selon la revendication 1, dans lequel ledit dispositif terminal (1) comprend en outre un moyen (73) d'impression des données de transaction lues.

4. Système automatique de transaction d'espèces selon la revendication 1, comprenant :
ledit dispositif terminal (1) ;
un ordinateur principal (90) connecté au dit dispositif terminal par le biais d'une unité de communication (11) pour recevoir des données de transaction et exécuter le traitement de la transaction, ledit ordinateur principal ayant un moyen de stockage des données de transaction (93) poùr le stockage de données concernant la transaction traitée ;
ledit moyen de stockage externe (5) comprenant une carte IC,
ladite carte IC comprenant un moyen de stockage des données de transaction (52), lesdites données de transaction étant protégées par un système de validation de manière à interdire des modifications opérées par l'utilisateur ; et
les données de transaction stockées dans ledit moyen de stockage des données de transaction (93) dans ledit ordinateur principal (90), mais non stockées dans le moyen de stockage des données de transaction (52) dans ladite carte IC (5) sont copiées depuis ledit moyen de stockage des données de transaction (93) situé dans ledit ordinateur principal en direction dudit moyen de stockage des données de transaction (52) situé dans ladite carte IC (5).

5. Système automatique de transaction d'espèces selon la revendication 4, où :
le moyen de stockage des données de transaction lisible et inscriptible (53) est disposé dans ladite carte IC (5), et
l'une des données de transaction stockée dans ledit moyen de stockage des données de transaction (52) ayant les mêmes contenus est copiée dans ledit moyen de stockage des données de transaction lisible et inscriptible (53).

6. Système automatique de transaction d'espèces selon la revendication 1 ou 2, où, si les contenus d'une pluralité desdites données de transaction sont substantiellement identiques, l'une des données de la transaction est affichée.

7. Système automatique de transaction d'espèces selon la revendication 1, où ledit moyen de stockage externe (5) comprend une carte IC, une carte magnétique, une carte magnétique optique ou une disquette.

8. Système automatique de transaction d'espèces selon la revendication 1, où les données de transaction utilisées dans ladite transaction sont stockées dans ledit moyen de stockage externe (5) seulement quand une instruction stockée est entrée par l'utilisateur ou seulement quand lesdites données de transaction sont différentes des données de transaction déjà stockées dans ledit moyen de stockage externe (5).

9. Système automatique de transaction d'espèces selon la revendication 1, comprenant :
ledit dispositif terminal (1) ;
un ordinateur principal (90) connecté au dit dispositif terminal par le biais d'une unité de communication (11) pour recevoir des données de transaction et exécuter le traitement de la transaction,
un moyen de stockage des données de transaction (95) prévu dans ledit ordinateur principal pour stocker les données de transaction effectuées, moyennant quoi
si l'utilisateur réalise une transaction sans utiliser ledit moyen de stockage externe (5), alors les données de transaction stockées dans ledit moyen de stockage des données de transaction (95) dudit ordinateur principal (90) sont reçues par le biais de l'unité de communication (11) et les données de transaction utilisées dans l'exécution d'une transaction sont stockées dans ledit moyen de stockage des données de transaction (95) situé dans ledit ordinateur principal (90) par le biais de l'unité de communication (11), et
si l'utilisateur réalise une transaction en utilisant ledit moyen de stockage externe (5), alors les contenus desdits moyens de stockage des données de transaction (95) sont copiés dans ledit moyen de stockage externe (5).

10. Système automatique de transaction d'espèces selon la revendication 1 ou 2, où les affichages desdites données de transaction sont effectués dans l'ordre de la date d'exécution de la transaction, en commençant par la plus récente.

11. Système automatique de transaction d'espèces selon la revendication 1, comprenant :
un moyen (2) pour afficher lesdites données de transaction sélectionnées, moyennant quoi les données de transaction avant modification sont toujours affichées pendant que l'utilisateur modifie les données de transaction.
